# EUROPEAN PATENT SPECIFICATION

(11) **EP 0 659 859 B1**
(45) Date of publication and mention of the grant of the patent: **31.03.1999**
(21) Application number: 94118768.4
(22) Date of filing: 29.11.1994
(51) Int. Cl.: C09J 4/00

(54) **Structural acrylic adhesives**
Strukturelle Acrylklebstoffe
Adhésifs structurels acryliques

(30) Priority: 20.12.1993 US 170490
(43) Date of publication of application: 28.06.1995
(73) Proprietor: National Starch and Chemical Investment Holding Corporation, Wilmington, Delaware 19809 (US)
(72) Inventor: Catena, William J., Lake Hiawatha, New Jersey 07034 (US); Edelman, Robert, Staten Island, New York 10310 (US)
(74) Representative: Hagemann, Heinrich, Dr.rer.nat., Dipl.-Chem.

(56) References cited:
- EP-A- 0 164 907
- EP-A- 0 478 220
- GB-A- 2 121 811
- US-A- 5 126 416

## Description

The present invention is directed to a two-part, mixable, structural adhesive system, applied as a single part and characterized long open time, good strength properties and relatively quick cure, both anaerobic and aerobic, as well as being gap-filling. More particularly, this invention involves a two-part acrylic adhesive comprising in one-part a polymerizable acrylic monomer and a peroxy polymerization initiator and in the second part a mixture of a transition metal compound and saccharin (o-benzosulfimide) as well as acrylic monomer.

Many acrylic adhesive systems having various characteristics and properties are known in the art as disclosed in Encyclopedia of Polymer Science & Technology, Vol. 1, pp. 571-572, 1985. The early acrylic engineering adhesives include well known DuPont technology directed to two-part adhesives involving methyl methacrylate as the principal monomer, chlorosulfonated polyethylene as the elastomer and cumene hydroperoxide (CHP) as the initiator US-A-3,890,407. These adhesives are characterized by rapid cure and have two other distinguishing properties, first, the cured polymer contains elastomeric domains, derived from grafting to the dispersed rubber and second, the monomers are capable of dissolving the oil often found on metal surfaces. Such adhesives are, therefore, much tougher and impact resistant than ordinary acrylic adhesives and additionally can be used on unprepared metal surfaces.

US-A-3,591,438 discloses increasing the curing speed of peroxy initiated acrylate adhesives by treating one or more of the surfaces to be bonded with a bonding accelerator containing an aldehyde-amine condensation product and as a reducing activator either a sulfur-containing free radical accelerator or a compound containing an oxidizable transition metal.

US-A-4,223,115 discloses structural adhesive systems for metal-bonding comprising a solution of polymerizable material having incorporated therein certain phosphorous-containing compounds and characterized by an ability of providing strong adhesion to untreated metal surfaces.

US-A-4,348,503 and 4,432,829 disclose adhesive compositions capable of functioning either aerobically or anaerobically and which include an acrylate monomer, a suitable elastomeric filler, an aromatic perester catalyst and a dibasic acid capable of cyclic tautomerism and optionally a small amount of a transition metal cure accelerator.

US-A-3,046,262 discloses accelerated anaerobic curing compositions wherein a peroxy catalyst and a sulfimide accelerator are used.

EP-A-0 478 220 discloses an adhesive composition, comprising an acrylic monomer, a peroxy initiator, an anaerobic accelerator, having a functional group represented by the formula -SO₂-NH-CO and a transition metal dithiolate.

US-A-5,126,416 discloses an adhesive composition, comprising an acrylic monomer, a peroxy initiator, nitrite, borate, silicate or carbonate as accelerator and a transition metal salt, if the composition includes an acid having a pKa of 6 or less.

GB-A-2 121 811 discloses a rapid curing two-part adhesive composition wherein the first part comprises an acrylic monomer and a transition metal salt and the second part comprises an acrylic monomer and a (hydro)peroxy initiator, with sulfimides as an optional compound of the part having the initiator.

US-A-4,052,244 and 4,081,308 disclose rapid curing two-part structural acrylic adhesives wherein the first part comprises an acrylic monomer and saccharin or copper saccharinate and the second part contains p-toluenesulfinic acid salt as a separate activator in the '244 patent and a solution of alpha-hydroxysulfone or alpha-aminosulfone in the '308 patent.

A recent patent, US-A-5,106,928 discloses two-part, mixable, structural acrylic adhesives using organoboron amine complex initiators. These adhesives have good strength properties and stability with relatively short open time of a few seconds up to a few minutes. Increasing the open time to 30 minutes or more, as is needed in large structural applications, results in reduced strength and extremely slow surface cure of the product outside the bondline.

While the acrylic adhesives disclosed in the prior art, as noted above, provide a variety of properties and different characteristics, they do not have all the features needed to adhere the very large parts found in many structural applications. These adhesives are frequently applied as separate activator and adhesive to different substrates making mixing and the desired degree of intimate contact difficult to attain when adhering large parts. Adhesives of this type also cure through a limited size bondline or gap (usually a maximum of about 1.0 mm (40 mils)) since cure occurs by diffusion of the activator from the surface into the adhesive. If the bondline is uneven with large gaps, the adhesive will remain incompletely cured. In contrast to this, a mixable two-part adhesive applied through a static mixer can fill very large gaps of as much as about 6.4 mm (250 mils) in size.

The adhesives of the prior art frequently do not cure aerobically and this results in adhesive outside the bondline not curing to a tack-free state in less than 24 hours.

Known two-part formulations that are available have a short open time (open time refers to the time after the adhesive has been applied until the part has been assembled). An adhesive with a short open time (e.g., less than 15 minutes) must of necessity be used on parts of limited size since if the part is large, the adhesive will advance significantly before the entire part surface can be covered and assembly completed.

Accordingly, for very large parts, an adhesive with a long open time (about 30-40 minutes or more) is desired. It is also desirable that once assembly is completed, cure to handling strength should occur as quickly as possible, usually in about one hour. Finally after cure is complete, the adhesive must have adequate levels of lap shear, peel and impact strength.

Thus the optimum two-part mixable adhesive for large parts requires precise cure behavior, initially very slow to provide sufficient open time, then increasing in rate to achieve handling strength and finally adequate aerobic cure to cure material outside the bondline.

This invention relates to a two-part, mixable, structural acrylic adhesive applied as a single part or combined entity wherein one-part comprises a polymerizable acrylic monomer and a peroxy polymerization initiator and the second part comprises a mixture of a transition metal compound and saccharin (o-benzosulfimide) in acrylic monomer. This adhesive provides long open time, fast cure to handling time, cure of the fillet (aerobic cure) and can be used to fill large gaps of up to about 6.4 mm (250 mils).

The two-part structural adhesive of this invention comprises polymerizable acrylic monomer, a peroxy initiator and a mixture of a transition metal compound and saccharin (o-benzosulfimide).

The polymerizable acrylic monomer may be monofunctional, polyfunctional or a combination thereof. Particularly useful monomers are monofunctional acrylate and methacrylate esters and the substituted derivatives thereof such as hydroxy, cyano, chloro and silane derivatives. Monomers of this type are represented by the general formula: 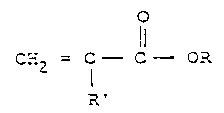 where R is an alkyl, cycloalkyl or heterocyclic (i.e., containing O, N or S) group of 1 to 12 carbon atoms, an aryl, aralkyl or alkaryl of 6 to 14 carbons and R' is hydrogen or methyl.
Such monomers include, for example, methyl acrylate, methyl methacrylate, ethyl acrylate, ethyl methacrylate, isobornyl methacrylate, hydroxyethyl methacrylate, hydroxypropyl acrylate, hydroxypropyl methacrylate, butyl acrylate, n-octyl acrylate, 2-ethylhexyl acrylate, 2-ethylhexyl methacrylate, decylmethacrylate, dodecylmethacrylate, cyclohexylmethacrylate, tert-butyl methacrylate, phenoxyethyl methacrylate, gamma-methacryloxypropyl trimethoxysilane, 2-cyanoethyl acrylate, 3-cyanopropyl acrylate, tetrahydrofurfuryl methacrylate, tetrahydrofurfuryl chloroacrylate, glycidyl acrylate, glycidyl methacrylate and the like.

A second class of polymerizable monomers useful in the present compositions correspond to the general formula: 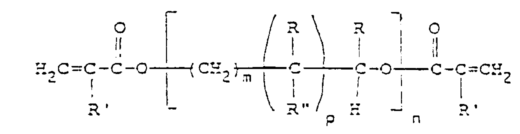 wherein R is selected from the group consisting of hydrogen, methyl, ethyl, 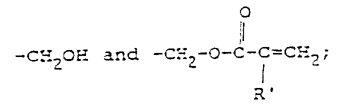
R' is selected from the group consisting of hydrogen, chlorine, methyl and ethyl;
R'' is selected from the group consisting of hydrogen, hydroxy, and 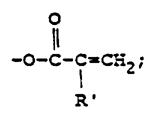
m is an integer equal to at least 1, e.g., from 1 to 8 or higher and preferably from 1 to 4 inclusive;
n is an integer equal to at least 1, e.g., from 1 to 20 or more; and
p is one of the following: 0 or 1.

Monomers useful in this invention and which come within the above general formula include, for example, ethylene glycol dimethacrylate, ethylene glycol diacrylate, polyethylene glycol diacrylate, tetraethylene glycol dimethacrylate, diglycerol diacrylate, diethylene glycol dimethacrylate, pentaerythritol triacrylate, trimethylolpropane trimethacrylate, and other polyether diacrylates and dimethacrylates.

The above class of monomers is disclosed in US-A-3,043,820.

Another class of polymerizable monomers useful in the present compositions correspond to the general formula: 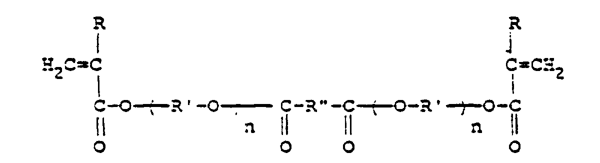 wherein R represents hydrogen, chlorine, methyl or ethyl; R' represents alkylene with 2-6 carbon atoms; and R" represents (CH₂)ₘ in which m is an integer of from 0 to 8, or 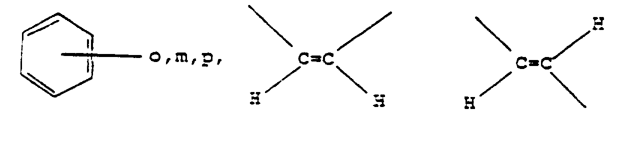 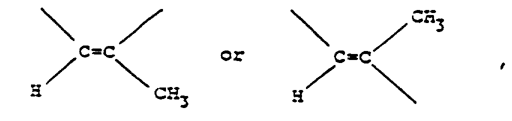 and
n represents an integer of from 1 to 4.

Typical monomers of this class include, for example, dimethacrylate of bis(ethylene glycol) adipate, dimethacrylate of bis(ethylene glycol) maleate, dimethacrylate of bis(diethylene glycol) phthalate, dimethacrylate of bis(tetraethylene glycol) phthalate, dimethacrylate of bis(tetraethylene glycol) sebacate, dimethacrylates of bis(tetraethylene glycol) maleate, and the diacrylates and chloroacrylates corresponding to said dimethacrylates, and the like.

The above class of monomers is disclosed in US-A-3,457,212.

Also useful herein are monomers which are isocyanate-hydroxyacrylate or isocyanate-aminoacrylate reaction products which may be characterized as acrylate terminated polyurethanes and polyurides or polyureas. These monomers correspond to the genera formula: 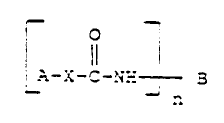 wherein X is selected from the group consisting of -O- and 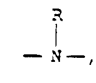 and
R is a member selected from the group consisting of hydrogen and lower alkyl of 1 to 7 carbon atoms; A represents the organic residue of an active hydrogen containing acrylic ester wherein the active hydrogen has been removed, the ester being hydroxy or amino substituted on the alkyl portion thereof and the methyl, ethyl and chlorine homologs thereof; n is an integer from 1 to 6 inclusive; and B is a mono- or polyvalent organic radical selected from the group consisting of alkyl, alkylene, alkenyl, cycloalkyl, cycloalkylene, aryl, aralkyl, alkaryl, poly(oxyalkylene), poly (carboalkoxyalkylene), and heterocyclic radicals both substituted and unsubstituted.

Typical monomers of this class include the reaction product of mono- or polyisocyanate, for example, toluene diisocyanate, with an acrylate ester containing a hydroxy or amino group in the non-acrylate portion thereof, for example, hydroxyethyl methacrylate.

The above class of monomers is described in US-A-3,425,988.

Another class of monomers useful in the present application are the mono- and polyacrylate and methacrylate esters of bisphenol type compounds. These monomers may be described by the formula: 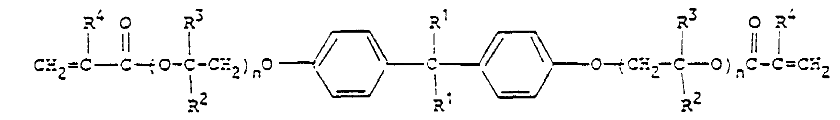 where R¹ is methyl, ethyl, carboxyalkyl or hydrogen; R² is hydrogen, methyl or ethyl; R³ is hydrogen, methyl or hydroxyl; R⁴ is hydrogen, chlorine, methyl or ethyl; and n is an integer having a value of 0 to 8.

Representative monomers of the above-described class include: dimethacrylate and diacrylate esters of 4,4'-bis-hydroxyethoxy-bisphenol A; dimethacrylate and diacrylate esters of bisphenol A; etc. These monomers are described in JP-A-70-15640.

In addition to the acrylic monomers as described above, the adhesive may include acrylic and methacrylic acid as part of the monomer portion of the adhesive. Such acid generally is used in an amount of 2 to 30%, preferably 5 to 10% by weight, based on the total weight of the composition.

The monomers useful herein are seen to be polymerizable monomers having one or more acrylic or substituted acrylic groups as a common, unifying characteristic, and for convenience may be generically termed acrylic monomers. Preferred adhesive compositions are those containing elastomeric or rubber polymers in compatible polymerizable acrylic monomers.

The elastomer or rubbery polymers may be any of the typically available synthetic rubbers or other materials that are soluble in the monomer such as those based on polyisoprenes, polybutadienes, polyolefins, polyurethane, polyesters, etc. Examples of elastomeric materials include homopolymers such as polybutadiene, polyisoprene and polyisobutylene; diene type block copolymers such as styrene/butadiene/styrene and styrene/isoprene/styrene; and graft or random copolymers such as butadiene/styrene copolymer, butadiene/acrylonitrile copolymer, butadiene/methyl methacrylate copolymer and butadiene/alkyl acrylate copolymer; ethylene/vinyl acetate copolymers; ethylene/alkyl acrylate copolymers (1-8 carbons in the alkyl group), rubbery polyalkyl acrylates or copolymers thereof; polyurethane; chlorinated polyethylenes; and EPDM (ethylene/-propylene/diene terpolymers).

The elastomers of these structures may contain a functional group at one or both ends or within a particular segment or repeating unit of the copolymer. Among the suitable functional groups are vinyl, epoxy, carboxyalkyl, and mercapto groups. Other functional groups may be employed as deemed useful as determined by routine experimentation.

One preferred group of elastomers are the block copolymers. Several such block copolymers are manufactured by Shell Chemical Company under the tradename Kraton and by Firestone under the tradename Stereon. In particular, Stereon 840 A, a poly(styrene-b-butadiene-b-styrene) block copolymer, has been found to be especially useful in the instant adhesive composition. Other preferred block copolymers of this type are available under the tradename Solprene 416, manufactured by Phillips Petroleum Co.

The monomer solution containing the elastomer or rubbery polymer is commonly prepared by dissolving the elastomer in the monomer, which may be in the form of a syrup. In some cases, the monomer solution may be prepared by extracting a rubbery polymer from a latex of the rubbery polymer in water, as used for suspension polymerization, and then dissolving in the monomer.

The peroxy polymerization initiator used in this invention may be any peroxy compound which is useful in initiating polymerization and more particularly is an organic hydroperoxide having the formula R-OOH, an organic peroxide having the formula ROOR' and a perester of the formula 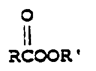 where R and R' in each of the above formulas represents a hydrocarbon group containing up to 18 carbon atoms. More particularly, the R and R' groups in the above formulas are an alkyl group of 1 to 18 carbon atoms, preferably 3 to 12 carbons or an aryl or alkaryl of 6 to 18, preferably 6 to 14 carbon atoms. R and R' may contain any substituent or linkage, hydrocarbon or otherwise, which does not affect the peroxy adversely for the purposes disclosed herein. Typical examples of such peroxy initiators are cumene hydroperoxide, t-butyl hydroperoxide, methylethylketone hydroperoxide and hydroperoxides formed by oxygenation of various hydrocarbons such as methylbutene, cetane and cyclohexene and various ketones and ethers, dicumyl peroxide, di-t-butyl peroxide, 2,5-dimethyl-2,5-di-t-butylperoxyhexane, t-butyl perbenzoate, di-t-butyl diperphthalate, and 2,5-dimethyl-2,5-bis(benzoylperoxy)hexane. The amounts of these hydroperoxy compounds which are used will typically range from 0.1 to 10% and preferably 3 to 6% by weight based on the weight of the part or component in which they are contained.

The second part of the two-part acrylic adhesive of this invention contains a mixture of a transition metal compound and saccharin (o-benzosulfimide).

The transition metal may be introduced as any appropriate soluble salt or organic compound. The transition metals are those which comprise classes IIIb, IVb, Vb, VIb, VIIb, VIIIb and Ib on the periodic chart of elements. The preferred group of transition metals is copper, iron, cobalt, nickel, manganese and vanadium with copper being particularly preferred. Useful soluble compounds are those of the formula ROM, where M is the transition metal and R is the residue of an organic acid or alcohol having up to 20 hydrocarbons. Examples of compounds of this type are copper naphthenate, cobalt naphthenate, manganese naphthenate, copper octoate, iron propionate, copper hexoate and iron hexoate.

The transition metal compound will normally be used in amounts of 100 or more parts per million (ppm) of metal, based on the weight of adhesive, and more particularly from 100 to 1500 ppm and preferably from 300 to 750 ppm.

Saccharin or o-benzosulfimide is the second component found in the second part of the adhesive system. While o-benzosulfimide is the preferred component, other organic imides can also be used. Useful organic imides include imides such as succinimide and particularly organic sulfimides of the formula: 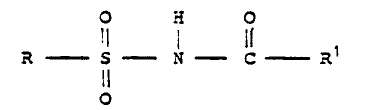 as well as organic disulfonylimides of the formula: 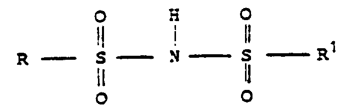 wherein R and R¹ in each of the above formulas is a hydrocarbon group containing up to 20 carbon atoms and more particularly is an alkyl, cycloalkyl, aryl and substituted hydrocarbon aryl having up to 10 carbon atoms. The R and R¹ groups can contain any linkage or substituent which does not adversely affect the compound for its intended use in the composition and further can be united to bond the imide group in a heterocyclic ring or a polynuclear heterocyclic ring system.

Saccharin or other organic imide is used in an amount of 0.01 to 5% by weight, based on the weight of adhesive composition, and preferably from 0.25 to 2%.

The amount of the acrylic monomer to be used in this invention may vary somewhat depending on the specific properties desired but generally 10 to 90% by weight of the acrylic monomer based on the weight of the composition and preferably 15 to 80% by weight is used. The elastomer is generally present in amounts of 5 to 80% by weight and preferably 20 to 60% by weight based on the weight of the composition. These amounts refer to the total amounts of the acrylic monomer and elastomer included in both parts of the composition and can be varied or the same in both parts. Also the acrylic monomer and elastomer may be the same or different in each of the parts of the composition. The two parts which are mixed together can be in any proportion or ratio as long as all the ingredients are dissolved in the monomer and the peroxy initiator is in one part and the transition metal compound and organic imide are in the other part. More particularly the two parts may be in a mixable ratio of 20:1 to 1:20 and preferably 2:1 to 1:2 parts by volume. Most preferable is the system having a 1:1 mixable ratio of the two parts by volume. Adjustments within these ranges are easily made within the skill of the art.

Other additives such as adhesion promoters, inhibitors, thickeners, plasticizers and diluents may be used in the adhesive composition of this invention.

Adhesive compositions of this invention provide 1:1 mixable, easily handled (low odor, non-flammable, gap-filling) adhesive systems that give advantageous long open times of 15-45 minute, preferably 30-40 minutes, reasonably short handling times of less than 5 to 6 hours, preferably less than 2 hours, and aerobic cure in 24 hours or less making them particularly useful in large structural applications.

In the following example, which is merely Illustrative of the embodiments of this invention, all parts and percentages are given by weight and all temperatures in degrees Celsius unless otherwise noted.

### EXAMPLE I

The following two-part structural acrylic adhesive system was prepared by dissolving Stereon 840 A rubber (styrene-butadiene block copolymer) in the indicated methacrylate and methacrylic acid and mixing for 12-16 hours at room temperature. In Part A, cumene hydroperoxide was stirred in slowly at room temperature for about 15 minutes. This was followed by mixing in fumed silica in about 30 minutes.

In Part B, saccharin was mixed in slowly at room temperature over about one hour followed by addition of copper naphthenate with mixing over 15 minutes and then addition of fumed silica. Mixing was continued for 30 minutes.

| **PART A** | |
|---|---|
| | Parts |
| Stereon 840 A (styrene-butadiene block copolymer) | 23.77 |
| Isobornyl methacrylate | 57.04 |
| 2-ethylhexyl methacrylate | 14.26 |
| Cumene hydroperoxide | 2.94 |
| Cabosil M-5 (fumed silica) | 2.00 |

| **PART B** | |
|---|---|
| Stereon 840 A | 23.45 |
| 2-ethylexyl methacrylate | 14.07 |
| Tetrahydrofurfuryl methacrylate | 46.90 |
| Methacrylic acid | 9.38 |
| Saccharin | 0.95 |
| Copper naphthenate | 1.25 |
| Cabosil M-5 (fumed silica) | 4.00 |

The two separate parts were added in equal volumes to a dual cartridge attached to a static mixer containing 8 elements. A caulking gun with two plungers was used to dispense the adhesive through the static mixer. The adhesive was applied to a steel substrate suitable for shear testing. No cleaning of the substrate was done. After 30 minutes a second substrate was used to form a shear strength test specimen. The two parts of the specimen could not be moved after 60 minutes and the following mechanical properties were obtained on the adhesive system:
Shear strength, N/m² (psi) (25°C, 25h, steel) 14,000,000 (2,100)
Peel strength, N/m (pli) (25°C, 24h, 180°, steel, 0.13 mm (5 mil) gap) 7400 (42)
Peel strength, N/m (pli) (25°C, 24h, 90°, Al, 0.13 mm (5 mil) gap) 5600 (32)

Adhesive that was squeezed outside the bondline in preparing the test specimen exhibited no tackiness after 20 hours.

### EXAMPLE II

A two-part structural acrylic adhesive system was prepared as in Example I and had the following formulation.

| **PART A** | |
|---|---|
| | Parts |
| Stereon 840A (styrene-butadiene block copolymer) | 25 |
| Isobornyl methacrylate | 40 |
| 2-Ethylhexyl methacrylate | 35 |
| Cumene hydroperoxide | 3 |
| Cabosil M-5 (fumed silica) | 1.5 |

| **PART B** | |
|---|---|
| Stereon 840A (styrene-butadiene block copolymer) | 25 |
| Tetrahydrofurfuryl methacrylate | 45 |
| Isobornyl acrylate | 20 |
| Methacrylic acid | 10 |
| Saccharin | 1 |
| Cabosil M-5 (fumed silica) | 2.25 |
| Copper naphthenate | 1.32 |

The adhesive system was mixed and applied as in Example I and had an open time of 30 minutes, time to handling of 60 minutes, fillet cure achieved in 16 hours and the lap shear strength after 72 hours of 19,000,000 N/m² (2800 psi).

### EXAMPLE III

A two-part structural acrylic adhesive system was prepared as in Example II with the same formulation except t-butyl perbenzoate was substituted for cumene hydroperoxide in Part A. The open time was 30 minutes and the time to handling strength was 3 hours.

## Claims

1. A curable two-part, mixable adhesive composition having long open time, short handling time and provides both anaerobic and aerobic cure comprising a polymerizable acrylic monomer and an effective amount of a peroxy polymerization initiator in one-part and the second part contains a mixture of a transition metal compound and organic sulfimide or organic disulfonylimide in acrylic monomer.

2. The composition of Claim 1 wherein the organic sulfimide is o-benzosulfimide.

3. The composition of Claim 2 wherein the transition metal is copper.

4. The composition of Claim 3 wherein from 100 to 1500 ppm of transition metal and 0.01 to 5% by weight of o-benzosulfimide are used, based on the weight of the composition.

5. The composition of Claim 4 wherein the peroxy polymerization initiator is an organic hydroperoxide having the formula R-OOH, an organic peroxide having the formula ROOR' or a perester of the formula 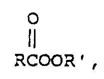 where R and R' in each of the above formulas represents a hydrocarbon group of 1 to 18 carbon atoms.

6. The composition of any of the preceding claims wherein either or both parts of the composition contain a rubbery polymer or elastomer.

7. The composition of Claim 6 wherein from 10 to 90% by weight of the acrylic monomer and from 5 to 80% by weight by the rubbery polymer or elastomer, based on the total weight of the composition are used.

8. The composition of Claim 7 wherein 0.1 to 10% by weight of the peroxy initiator is used, based on the weight of the part in which it is contained.

9. The composition of Claim 8 wherein the transition metal compound is copper naphthenate, the acrylic monomer contains acrylic or methacrylic acid, and a 1:1 mixable ratio by volume of the two part is used.

10. A method of bonding facing surfaces which comprises interposing between said surfaces the curable adhesive composition of one of the preceding claims, placing the surfaces in an abutting relationship and permitting the adhesive to cure.

## Patentansprüche

1. Aushärtbare, zweiteilige, mischbare Klebstoffzusammensetzung, die eine lange offene Zeit und eine kurze Handhabungszeit hat und sowohl anaerobe als auch aerobe Aushärtung ermöglicht, umfassend ein polymerisierbares Acrylatmonomer und eine effektive Menge eines Peroxypolymerisationsinitiators in einem Teil, wobei der zweite Teil eine Mischung aus einer Übergangsmetallverbindung und einem organischen Sulfimid oder einem organischen Disulfonylimid in einem Acrylatmonomer enthält.

2. Zusammensetzung nach Anspruch 1, worin das organische Sulfimid o-Benzosulfimid ist.

3. Zusammensetzung nach Anspruch 2, worin das Übergangsmetall Kupfer ist.

4. Zusammensetzung nach Anspruch 3, worin 100 bis 1500 ppm des Übergangsmetalls und 0,01 bis 5 Gew.-% o-Benzosulfimid verwendet werden, bezogen auf das Gewicht der Zusammensetzung.

5. Zusammensetzung nach Anspruch 4, worin der Peroxypolymerisationsinitiator ein organisches Hydroperoxyd mit der Formel R-OOH, ein organisches Peroxyd mit der Formel ROOR' oder ein Perester der Formel 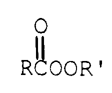 ist, wobei R und R' in jeder der obigen Formeln eine Kohlenwasserstoffgruppe von 1 bis 18 Kohlenstoffatomen darstellen.

6. Zusammensetzung nach mindestens einem der vorhergehenden Ansprüche, worin ein oder beide Teile der Zusammensetzung ein gummiartiges Polymer oder Elastomer enthalten.

7. Zusammensetzung nach Anspruch 6, worin 10 bis 90 Gew.-% des Acrylatmonomers und 5 bis 80 Gew.-% des gummiartigen Polymers oder Elastomers, bezogen auf das Gesamtgewicht der Zusammensetzung, verwendet werden.

8. Zusammensetzung nach Anspruch 7, worin 0,1 bis 10 Gew.-% des Peroxyinitiators verwendet werden, bezogen auf das Gewicht des Teiles, in dem dieser enthalten ist.

9. Zusammensetzung nach Anspruch 8, worin die Übergangsmetallverbindung Kupfernaphthenat ist, das Acrylatmonomer Acryl- oder Methacrylsäure enthält und ein 1:1-mischbares Volumenverhältnis der beiden Teile verwendet wird.

10. Verfahren zum Verkleben gegenüberliegender Oberflächen, das das Aufbringen der aushärtbaren Klebstoffzusammensetzung nach einem der vorhergehenden Ansprüche zwischen diesen Oberflächen, das Bringen der Oberflächen in eine aneinander anliegenden Lage und das Abwarten, bis der Klebstoff ausgehärtet ist, umfaßt.

## Revendications

1. Composition d'adhésif durcissable en deux parties, apte au mélange, ayant une longue durée de conservation, un temps bref de manipulation et une capacité de durcissement anaérobie et de durcissement aérobie, comprenant un monomère acrylique polymérisable et une quantité efficace d'un initiateur de polymérisation à fonction peroxy dans une partie, la seconde partie contenant un mélange d'un composé de métal de transition et d'un sulfimide organique ou disulfonylimide organique dans un monomère acrylique.

2. Composition suivant la revendication 1, dans laquelle le sulfimide organique consiste en o-benzosulfimide.

3. Composition suivant la revendication 2, dans laquelle le métal de transition est le cuivre.

4. Composition suivant la revendication 3, dans laquelle 100 à 1500 ppm de métal de transition et 0,01 à 5 % en poids de o-benzosulfimide sont utilisés, sur la base du poids de la composition.

5. Composition suivant la revendication 4, dans laquelle l'initiateur de polymérisation à fonction peroxy est un hydroxyperoxyde organique répondant à la formule R-OOH, un peroxyde organique répondant à la formule ROOR' ou un perester de formule 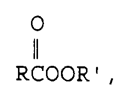 les groupes R et R', dans chacune des formules précitées, représentant un groupe hydrocarboné ayant 1 à 18 atomes de carbone.

6. Composition suivant l'une quelconque des revendications précédentes, dans laquelle l'une des, ou les deux, parties de la composition contiennent un polymère caoutchouteux ou élastomère.

7. Composition suivant la revendication 6, dans laquelle 10 à 90 % en poids du monomère acrylique et 5 à 80 % en poids du polymère caoutchouteux ou élastomère, sur la base du poids total de la composition, sont utilisés.

8. Composition suivant la revendication 7, dans laquelle 0,1 à 10 % en poids de l'initiateur à fonction peroxy sont utilisés, sur la base du poids de la partie dans laquelle cet initiateur est présent.

9. Composition suivant la revendication 8, dans laquelle le composé de métal de transition est le naphténate de cuivre, le monomère acrylique contient de l'acide acrylique ou de l'acide méthacrylique, et un rapport volumique, apte au mélange, des deux parties égal à 1:1 est utilisé.

10. Procédé pour lier des surfaces destinées à venir en contact, qui comprend les étapes consistant à interposer entre lesdites surfaces la composition d'adhésif durcissable suivant l'une des revendications précédentes, à placer les surfaces en contact et à laisser l'adhésif durcir.
